# FASCICULE DE BREVET EUROPEEN

(11) **EP 0 526 262 B1**
(45) Date de publication et mention de la délivrance du brevet: **27.12.1995**
(21) Numéro de dépôt: 92401531.6
(22) Date de dépôt: 04.06.1992
(51) Int. Cl.: B24B 37/04

(54) **Procédé de polissage de composants microélectroniques**
Verfahren zum Polieren von Komponenten der Mikroelektronik
Method for polishing microelectronic components

(30) Priorité: 06.06.1991 FR 9106865
(43) Date de publication de la demande: 03.02.1993
(73) Titulaire: COMMISSARIAT A L'ENERGIE ATOMIQUE, 75015 Paris (FR)
(72) Inventeur: Baldy, André, F-38180 Seyssins (FR); Barrois, Gérard, F-38120 Le Fontanil (FR); Blanc, Henri, F-38134 Saint Julien de Ratz (FR); Dominiak, Marcel, F-38000 Grenoble (FR)
(74) Mandataire: Dubois-Chabert, Guy

(56) Documents cités:
- EP-A- 0 101 259
- DE-A- 3 610 054
- FR-A- 2 107 309
- US-A- 4 863 490
- DATABASE WPI Section PQ, Week 7532, Derwent Publications Ltd., London, GB; Class P61, AN 75-J1022W & SU-A-428 930 (KOVALEV) 13 November 1974
- DATABASE WPI Section Ch, Week 7834, Derwent Publications Ltd., London, GB; Class L, AN 78-61492A & JP-A-53 083 188 (NIPPON TUNGSTEN KK) 22 Juillet 1978
- DATABASE WPIL Section Ch, Week 8120, Derwent Publications Ltd., London, GB; Class L, AN 81-35780D & SU-A-755 536 (BONDARENKO)19 Aout 1980
- PATENT ABSTRACTS OF JAPAN vol. 11, no. 196 (M-601)(2643) 24 Juin 1987 & JP-A-62 019 377 (F S K K.K) 28 Janvier 1987

## Description

La présente invention a pour objet un procédé de polissage de composants microélectroniques intégrés dans des plaquettes de semiconducteur (en silicium par exemple). Il peut s'agir notamment, de têtes magnétiques d'écriture et de lecture.

Des procédés de réalisation de telles têtes sont décrits dans de nombreux documents et notamment dans US-A-4,837,924 et US-A-4,333,229. Le premier document se rapporte à des têtes à structure dite "horizontale" -car formée d'un empilement de couches déposées sur la face supérieure d'une plaquette semiconductrice-et le second à des têtes à structure dite "verticale" -car formée de couches déposées sur la tranche d'une telle plaquette-.

Les micro-usinages effectués sur de telles plaquettes consistent, dans le premier cas, à niveler (ou "planariser") et à polir divers sous-ensembles intermédiaires obtenus au cours du procédé de réalisation, à définir un entrefer et à amener l'ensemble de la tête dans le plan général du substrat, dit encore plan de vol.

Dans le second cas, les micro-usinages ont pour but de définir un entrefer et d'ajuster la forme des patins de vol.

Bien que pouvant s'appliquer éventuellement à la réalisation de têtes de la deuxième catégorie (têtes verticales), le procédé de la présente invention est avant tout destiné au polissage d'ensembles ou sous-ensembles correspondants à la première catégorie (têtes horizontales) car c'est dans ce cas que les problèmes technologiques sont les plus ardus.

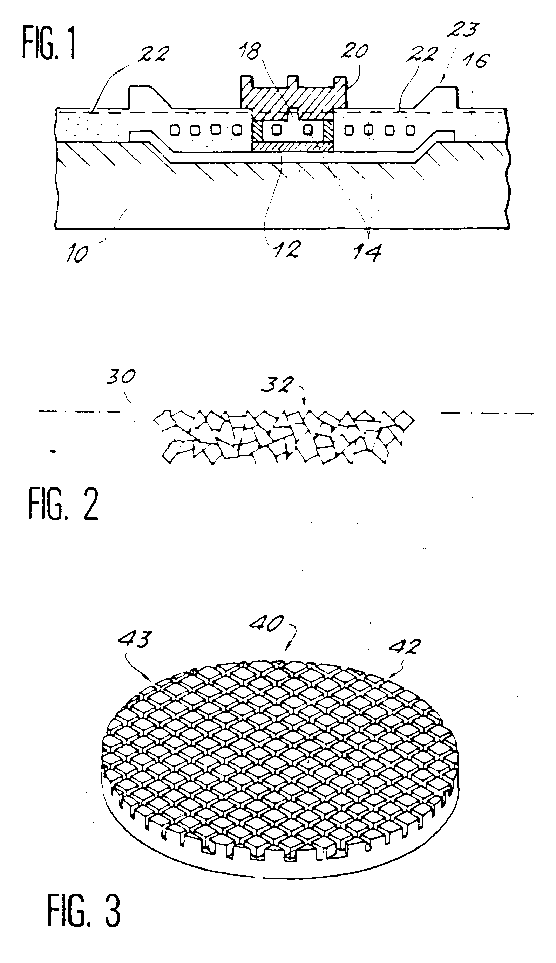

La figure 1 montre, à titre d'exemple de pièce à polir, une tête magnétique d'écriture et de lecture en structure horizontale. L'ensemble représenté correspondant à la dernière étape de réalisation avant polissage final. Cet ensemble comprend un substrat de silicium 10 dans lequel un caisson a été gravé, un circuit magnétique 12 en alliage fer-nickel, un double bobinage en cuivre 14, une couche en silice 16 de 3 à 6»m d'épaisseur, un espaceur amagnétique 18 en silice de 1»m d'épaisseur environ et deux pièces polaires supérieures 20 en fer-nickel. Le plan de polissage final est marqué en trait interrompu et référencé 22.

L'enlèvement de matière porte sur les pièces polaires 20 et sur les dépassements 23 en silice. Pour ne pas altérer le circuit magnétique, cet enlèvement ne doit pas diminuer l'épaisseur de la couche uniforme de silice de plus de 0,3»m. Le plan final de polissage définit le plan de vol de la tête.

Deux telles têtes sont généralement disposées côte à côte sur deux bandes parallèles dites "skis", définissant deux plans de vol, dans une structure générale en catamaran.

Le polissage, qui consiste en un enlèvement de matière en très petite quantité, est une opération bien connue. On la rencontre en métallographie, en optique et en microélectronique. L'une ou l'autre des deux techniques suivantes est utilisée :
- **la rectification à l'outil diamanté :** il s'agit d'un usinage dans lequel on forme un "copeau" semi-continu ou continu par deux mouvements combinés relatifs entre l'outil et la pièce à usiner (un mouvement d'avance et un mouvement de coupe) ;
- **le rodage et polissage :** il s'agit d'une abrasion plus ou moins fine (ou écrouissage) et contrôlée de la surface par frottement sur des disques très variés non abrasifs par nature, sur lesquels on apporte un abrasif en pâte ou en solution aqueuse ; une variante consiste à placer, sur un plateau de polissage rotatif, un disque de film abrasif et à arroser celui-ci lors du polissage avec un liquide pour refroidir la pièce et éviter l'encrassement.

Le polissage des plaquettes semiconductrices comprenant un très grand nombre de microcomposants intégrés pose des problèmes particuliers :
- tout d'abord, la plaquette est déformée et déformable,
- par ailleurs, le rodage doit affecter simultanément plusieurs matériaux de duretés très différentes : silice, alumine, alliage alumine/carbure de titane, alliage fer-nickel,
- les pièces à roder sont de surfaces très petites par rapport à la plaquette de silicium,
- enfin, il s'agit d'usiner, dans leur épaisseur, des couches déposées sur une plaquette, et généralement, il faut polir simultanément 600 excroissances correspondant à 600 têtes magnétiques, en dépassement de quelques microns, et cela avec une précision de l'ordre du nanomètre, sans diminuer l'épaisseur de la couche mince qui recouvre la plaquette de plus de 200 à 300 nm.

Les machines de polissage de l'art antérieur ne permettent pas de résoudre toutes ces difficultés, en partie parce que l'outil de polissage est défectueux. Les abrasifs en pâte ou en liquide donnent lieu à des phénomènes hydrodynamiques complexes liés à l'apparition de mouvements tourbillonnaires et à des phénomènes de cavitation, qui arrondissent les reliefs et creusent les matériaux tendres. Quant aux feuilles abrasives, collées sur disque, elles se déforment et se plissent sous l'effet de la pression exercée en cours de polissage, ce qui, à nouveau arrondit les profils.
Le document WORLD PATENT INDEX, Section PQ, Week 7532 décrit un procédé pour fabriquer des outils de polissage. Ce procédé consiste à rouler des grains abrasifs entre la surface de l'outil à réaliser et un contre-outil pour provoquer des micro-aspérités à la surface de l'outil.

La présente invention a justement pour but de remédier à ces inconvénients. A cette fin, l'invention propose un procédé de polissage qui permet d'obtenir un poli remarquable, tout en préservant les formes des profils et cela quelles que soient les duretés relatives des matériaux constituant les excroissances à travailler.

Par ailleurs, le procédé de polissage selon l'invention étant un procédé de polissage à sec, il se trouve compatible avec les exigences de l'industrie électronique, notamment avec l'emploi en salle blanche, ce qui n'est pas le cas avec les outils traditionnels.

De façon plus précise, la présente invention a pour objet un procédé de polissage de composants microélectroniques intégrés dans des plaquettes de semiconducteur, caractérisé en ce qu'on utilise un outil de polissage à sec constitué par un plateau en céramique dure dont la surface est dépolie pour fracturer les grains de la céramique, ce qui laisse un plateau avec un état de surface présentant une certaine rugosité.

Les céramiques utilisées dans l'invention se rangent en deux catégories, selon les résultats recherchés :
**1. Rectification rapide avec état de surface médiocre :**
   On utilisera des céramiques prises dans le groupe comprenant le nitrure de silicium, les alumines (sauf les aluminues à structure rhomboédrique), les zircones. Les zircones sont très endurantes pour le travail de matériaux relativement tendres (métaux). Le nitrure de silicium permet le travail de matériaux très durs.
**2. Microusinage fin de tous matériaux avec de meilleurs résultats sur les matériaux durs :**
   On utilisera des céramiques prises dans le groupe comprenant l'alliage alumine-carbure de titane, le carbure de silicium, le carbure de bore massif, le diborure de titane.

Cette distinction en deux catégories tient à la structure cristalline du matériau et non à sa dureté. Après fracture, on obtient, pour une même rugosité, des surfaces très agressives pour la première catégorie et des surfaces plus aptes à un enlèvement progressif de matière pour la seconde. La dureté des céramiques n'intervient que pour l'aptitude au travail de matériaux durs et pour l'endurance des outils.

On voit qu'il s'agit de céramiques très dures, dont la dureté Vickers va d'environ 1200 à environ 3000.

L'état de surface de ces céramiques après dépolissage est compris entre environ Ra=0,2»m et environ Ra=0,8»m.

De toute façon, les caractéristiques et avantages de l'invention apparaîtront mieux à la lumière de la description qui va suivre. Cette description porte sur des exemples de réalisation donnés à titre explicatif et nullement limitatif et elle se réfère à des dessins annexés, sur lesquels :
- la figure 1, déjà décrite, montre un exemple de pièce à polir correspondant à une tête magnétique d'écriture et de lecture,
- la figure 2 montre, en coupe, l'état de surface d'un outil
- la figure 3 illustre un rainurage de l'outil,
- la figure 4 illustre un premier exemple de polissage, dans le cas d'une excroissance en silice,
- la figure 5 illustre un autre exemple de polissage, dans le cas d'un motif en deux matériaux différents.

On voit, sur la figure 2, un plateau en céramique 30 dont la surface 32 est constituée de grains fracturés.

La fracture de l'état de surface s'obtient en dépolissant la surface, par l'emploi d'abrasifs en pâte de grains très forts sur des plateaux durs (par exemple en fonte).

Ce procédé agit par martelage microscopique de la surface, cassant les grains selon le plan de clivage des cristaux. On obtient ainsi une surface plane, très rigide, revêtue de véritables micro-outils.

Par ailleurs, cette surface microabrasive peut être régénérée aisément, en renouvelant le procédé de dépolissage.

L'outil de la figure 3, référencé 40, présente un quadrillage régulier obtenu par une première famille de rainures 42 et une seconde famille de rainures 43. Ces rainures améliorent le contact entre l'outil et les motifs à travailler. Le quadrillage assure, par ailleurs, une meilleure évacuation des débris.

Les dispositions qui viennent d'être décrites peuvent être avantageusement combinées avec celles qui ont fait l'objet d'une autre demande de brevet déposée par le présent Demandeur, le jour même du dépôt de la présente demande et intitulée : "Machine de polissage à table porte-échantillon perfectionnée".

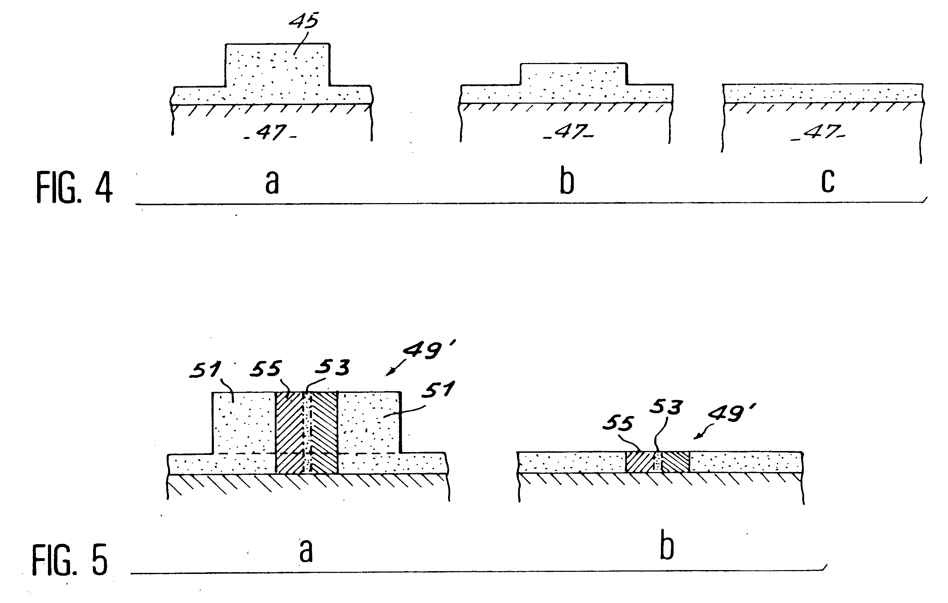

Avec une machine de polissage combinant ces deux dispositions, le Demandeur a obtenu des résultats remarquables qui sont illustrés sur les figures 4 et 5.

Sur la figure 4, tout d'abord, on voit (partie a) un relief en silice 45 d'environ 2»m de hauteur, sur une couche de silicium 47 d'épaisseur 1»m présentant une rugosité Ra=50nm.

En cours de polissage (partie b), le profil conserve ses arêtes vives.

A la fin du polissage (partie c), le relief a disparu et la couche de base a été ramenée à une épaisseur de 0,9»m, avec une rugosité Ra=1 à 2nm.

La figure 5 est relative à une excroissance 49 mettant en jeu des matériaux de duretés différentes : de la silice SiO₂, de part et d'autre (référence 51) du motif et dans un espaceur 53 très mince (d'environ 1»m) et un alliage fer-nickel FeNi 55 de part et d'autre de l'espaceur 53.

On voit (partie a) la forme initiale du motif 49 et (partie b) la forme définitive 49′ après polissage. La rugosité du sommet est de l'ordre de Ra=1 à 2nm.

## Revendications

1. Procédé de polissage de composants microélectroniques intégrés dans des plaquettes de semiconducteur, caractérisé en ce qu'on utilise un outil de polissage à sec constitué par un plateau (30) en céramique dure dont la surface (32) est dépolie pour fracturer les grains de la céramique, ce qui laisse un plateau avec un état de surface présentant une certaine rugosité.

2. Procédé selon la revendication 1, caractérisé en ce que l'état de surface du plateau présente une rugosité comprise entre Ra=0,2 et Ra=0,8 »m.

3. Procédé selon la revendication 2, caractérisé par le fait que la céramique est sélectionnée dans le groupe constitué par le nitrure de silicium, les zircones, les alumines, sauf les alumines à structure rhomboédrique.

4. Procédé selon la revendication 1, caractérisé par le fait que la céramique est sélectionnée dans le groupe constitué par l'alliage alumine-carbure de titane, le carbure de silicium, le carbure de bore massif, le diborure de titane.

5. Procédé selon la revendication 1, caractérisé par le fait que la surface du plateau présente des rainures (42, 43).

6. Procédé selon la revendication 5, caractérisé par le fait que la surface du plateau présente des rainures (42, 43) régulièrement espacées formant quadrillage.

## Claims

1. Method of polishing microelectronic components integrated in semiconductor wafers, characterized in that a dry polishing tool consisting of a plate (30) made of hard ceramic is used, the surface (32) of which is abraded in order to fracture the grains of the ceramic, which leaves a plate with a surface finish having a certain rugosity.

2. Method according to Claim 1, characterized in that the surface finish of the plate has a rugosity of between Ra = 0.2 and Ra = 0.8 »m.

3. Method according to Claim 2, characterized in that the ceramic is selected from the group consisting of silicon nitride, zirconias and aluminas, except for aluminas having a rhombohedral structure.

4. Method according to Claim 1, characterized in that the ceramic is selected from the group consisting of alumina/titanium carbide alloy, silicon carbide, solid boron carbide and titanium diboride.

5. Method according to Claim 1, characterized in that the surface of the plate has grooves (42, 43).

6. Method according to Claim 5, characterized in that the surface of the plate has uniformly spaced grooves (42, 43) forming a grid.

## Patentansprüche

1. Verfahren zum Polieren von in Halbleiterscheiben integrierten Komponenten der Mikroelektronik,
**dadurch gekennzeichnet**,
daß man ein Trockenpolierwerkzeug verwendet, gebildet durch eine Platte (30) aus Hartkeramik, deren Oberfläche (32) mattiert wird, um die Keramikkörner zu brechen, was eine Platte ergibt, deren Oberflächenbeschaffenheit eine gewisse Rauhigkeit aufweist.

2. Verfahren nach Anspruch 1, dadurch gekennzeichnet, daß die Oberflächenbeschaffenheit eine Rauhigkeit aufweist, die enthalten ist zwischen Ra=0,2 und Ra=0,8 »m.

3. Verfahren nach Anspruch 2, dadurch gekennzeichnet, daß die Keramik gewählt wird aus der Gruppe, die gebildet wird durch das Siliciumnitrid, die Zirkone, die Aluminiumoxide, ausgenommen die Aluminiumoxide mit rhomboedrischer Struktur.

4. Verfahren nach Anspruch 1, dadurch gekennzeichnet, daß die Keramik gewählt wird aus der Gruppe, die gebildet wird durch die Aluminiumoxid-Titankarbid-Legierung, das Siliciumkarbid, das massive bzw. schwere Borkarbid, das Titan-Diborid.

5. Verfahren nach Anspruch 1, dadurch gekennzeichnet, daß die Oberfläche der Platte Rillen (42, 43) aufweist.

6. Verfahren nach Anspruch 5, dadurch gekennzeichnet, daß die Oberfläche der Platte regelmäßig beabstandete Rillen (42, 43) aufweist, die ein Gitter bzw. Würfelmuster bilden.
